# EUROPÄISCHE PATENTSCHRIFT

(11) **EP 1 398 549 B1**
(45) Veröffentlichungstag und Bekanntmachung des Hinweises auf die Patenterteilung: **15.06.2005**
(21) Anmeldenummer: 03015933.9
(22) Anmeldetag: 12.07.2003
(51) Int. Cl.: F16J 15/34, F16J 15/16

(54) **Gleitringdichtung**
Mechanical seal
Garniture étanche à anneau glissant

(30) Priorität: 13.09.2002 DE 10242731
(43) Veröffentlichungstag der Anmeldung: 17.03.2004
(73) Patentinhaber: Federal-Mogul Friedberg GmbH, 86316 Friedberg (DE)
(72) Erfinder: Göbbels, Franz Josef, 51599 Burscheid (DE); Krus, Ralf, 51789 Lindlar (DE)

(56) Entgegenhaltungen:
- EP-A- 0 348 769
- DE-A- 3 141 512
- DE-A- 3 523 485
- DE-A- 19 511 708
- DE-A- 19 623 577
- DE-U- 6 607 175
- US-A- 5 160 149

## Beschreibung

Die Erfindung betrifft eine Gleitringdichtung zur Abdichtung von Bauteilen mit hoher Temperaturbeaufschlagung, bestehend aus einem Gleit- und/oder Gegenring, der mit einer außerhalb seiner Gleitfläche vorgesehenen, zur Aufnahme wenigstens eines elastischen Dichtkörpers bestimmten konischen Umfangsfläche versehen ist.

Eine derartige Gleitringdichtung ist aus dem Dokument EP-A-348 759 bekannt.

Durch die DE-A 3 141 512 ist ein Gleit- und/oder Gegenring einer Gleitringdichtung bekannt geworden, der insbesondere zum Einsatz unter relativ hohen Drucken geeignet ist, mit einer zur Aufnahme wenigstens eines elastischen Rollkörpers bestimmten kegeligen Umfangsfläche, wobei sich der Rollkörper im Einbauzustand zwischen der kegeligen Umfangsfläche und einer ebenfalls kegelig ausgebildeten korrespondierenden Umfangsfläche, eines den Gleit- und/oder Gegenring aufnehmenden Maschinen- bzw. Gehäuseteiles erstreckt. Zwischen dem Gleit- und/oder Gegenring und dem korrespondierenden Maschinen- bzw. Gehäuseteil befindet sich mediumseitig mindestens eine Sekundärdichtstelle. Selbige ist vorteilhafterweise durch einen O-Ring gebildet, der in einer umlaufenden Nut im zylindrischen Bereich des Gleit- und/oder Gegenringes angeordnet ist. Der O-Ring ist stets auf der dem Druck zugewandten Seite vorgesehen.

Bauteile mit hoher Temperaturbeaufschlagung, wie sie beispielsweise durch Getriebe, Mühlen, Mischtrommeln, Kalander oder dergleichen gebildet werden, führen dazu, das sich der Temperatureinfluß nachteilig auf den üblicherweise aus Elastomermaterial bestehenden Dichtkörper auswirkt, was soweit gehen kann, das seine elastisch vorspannende Funktion innerhalb kürzester Zeit nicht mehr gegeben ist und die Gleitringdichtung dadurch ausfällt. Die hier angegebene Gleitringdichtung ist für hohe Temperaturen nicht einsetzbar, da ihre Elastomerkörper im wesentlichen ungeschützt den hohen Bauteil-Temperaturen ausgesetzt sein würden.

Der DE-C 196 23 577 ist eine Dichtung für Drehtrommeln zu entnehmen, wobei metallische Gleitsteine mit einem metallischen, in Achsrichtung elastischen Dichtträger zusammenwirken, die von einer Anzahl Federn spaltfrei an eine rotierende Dichtfläche angepresst werden, wobei der Dichtungsträger durch drei Lenker zentrisch und in Umfangsrichtung gehalten wird, jedoch in Arbeitsrichtung frei beweglich ist und das Dichtungsgehäuse durch Rollen an der rotierenden Dichtfläche zentriert ist. Hier wird bereits eine Möglichkeit aufgezeigt, eine Dichtung einzusetzen, die auch thermischen, chemischen und mechanischen Angriffen weitestgehend widersteht. Nachteilig ist hier jedoch festzustellen, das selbige kompliziert im Aufbau und in der Handhabung ist.

Der Erfindung liegt die Aufgabe zugrunde, eine im gattungsbildenden Teil des ersten Patentanspruches beschriebene Gleitringdichtung dahingehend weiterzubilden, das selbige auch für den Einsatz im Bereich von Bauteilen mit hoher Temperaturbeaufschlagung einsetzbar ist und darüber hinaus auch insbesondere chemischen Angriffen weitestgehend widersteht, so das eine hohe Standzeit herbeiführbar ist.

Diese Aufgabe wird gemäß kennzeichnendem Teil des ersten Patentanspruches dadurch gelöst, das der Gleit- bzw. Gegenring über den Dichtkörper in einem Aufnahmeelement gehalten ist, das zur Unterbrechung des Wärmeflusses vom jeweiligen Bauteil in Richtung des Dichtkörpers über mindestens ein Isolierelement mit dem jeweiligen Bauteil in Wirkverbindung steht.

Vorteilhafte Weiterbildungen des Erfindungsgegenstandes sind den zugehörigen Unteransprüchen zu entnehmen.

Mit dem Erfindungsgegenstand wird nun eine Gleitringdichtung bereitgestellt, die bei hoher Standzeit im Bereich von Bauteilen mit hoher Temperaturbeaufschlagung, wie sie beispielsweise durch Getriebe, Mischtrommeln, Kalander oder dergleichen gegeben sind, eingesetzt werden kann, da hier teilweise Temperaturen im Bereich oberhalb von 200°C auftreten können. Durch den Einsatz des Isolierelementes wird der Wärmefluß vom Bauteil auf das den Dichtkörper haltende separate Aufnahmeelement unterbrochen, wodurch sich je nach Materialauswahl des Isolierelementes eine Temperaturreduzierung von bis zu 100°C realisieren läßt. Durch diese Maßnahme ist der, in der Regel aus elastomeren Werkstoffen gebildete Dichtkörper, insbesondere den thermischen Einflüssen nicht mehr unmittelbar ausgesetzt, so das die Standzeit der Gleitringdichtung erheblich erhöht werden kann. Periphere Bauteile, wie Lager oder dergleichen, genießen eine ebenfalls erhöhte Standzeit, so das die Wirtschaftlichkeit der mit der erfindungsgemäßen Gleitringdichtung ausgerüsteten Anlagen bzw. Anlagenteile ebenfalls positiv beeinflußt wird.

Insbesondere bei erhöhten Temperaturen kann das Isolierelement, einem weiteren Gedanken der Erfindung gemäß, in Sandwichform ausgeführt werden. Hier kommen beispielsweise aus Blechen gebildete äußere Körper zum Einsatz, zwischen denen eine, vorteilhafterweise wabenartig ausgebildete, insbesondere aus metallischen Werkstoffen bestehende, Struktur vorgesehen sein kann. Die äußeren Körper werden beispielsweise durch aluminiumbeschichtete Stahlbleche gebildet, wobei hier jedoch in Abhängigkeit des Anwendungsfalles ebenfalls auch verzinkte oder andersartig beschichtete Stahl- oder Aluminiumbleche zum Einsatz gelangen können. Der wabenartig ausgebildete Zwischenbereich zwischen den äußeren Körpern kann durch mehrlagig übereinander angeordnete, beispielsweise aus Aluminium oder einer Aluminiumlegierung bestehende Folien gebildet werden, so das Luftkammern entstehen, die als Wärmeisolierung dienen. Auch hier können im freien Raum zwischen den äußern Körpern andersartige Materialien, wie beispielsweise Pulver, Fasern oder dergleichen eingebracht werden. Der Fachmann wird in Abhängigkeit vom Anwendungsfall die jeweilige Materialauswahl treffen.

Der Erfmdungsgegenstand ist anhand eines Ausführungsbeispieles in der Zeichnung dargestellt und wird wie folgt beschrieben. Es zeigen
- Figur 1: Prinzipskizze der erfindungsgemäßen Gleitringdichtung, beinhaltend lediglich einen Gleitring
- Figur 2: Prinzipskizze der erfindungsgemäßen Gleitringdichtung, beinhaltend einen Gleit- und einen Gegenring
- Figur 3: Prinzipieller Aufbau eines Isolierelementes

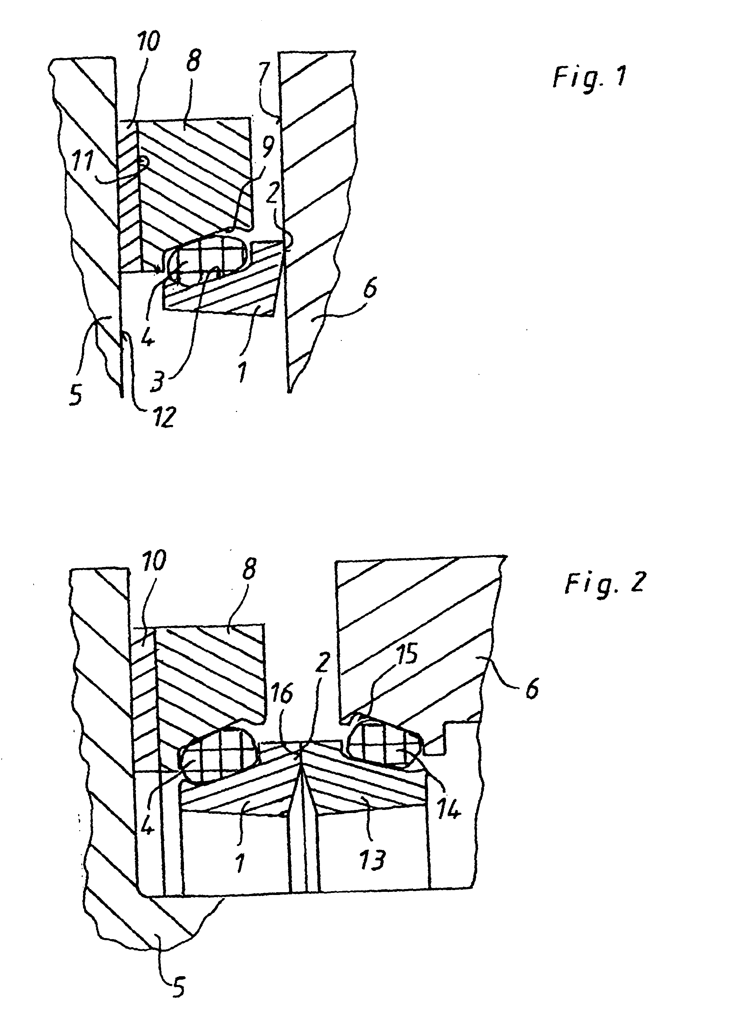

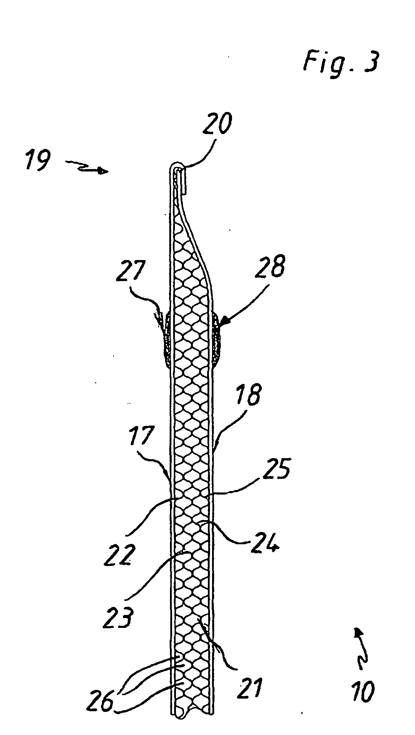

Figur 1 zeigt als Prinzipskizze die erfindungsgemäße Gleitringdichtung, die zur Abdichtung von Bauteilen mit hoher Temperaturbeaufschlagung (z. B. Getriebe, Mühlen, Mischtrommeln, Kalander oder dergleichen) zum Einsatz gelangen kann. Die Gleitringdichtung wird gebildet durch einen Gleitring 1, beinhaltend eine Gleitfläche 2 sowie eine von der Gleitfläche 2 abgewandte, konisch verlaufende Umfangsfläche 3, die zur Aufnahme eines elastischen Dichtkörpers 4 dient. Die Gleitringdichtung soll in diesem Beispiel zwischen einem stationären Bauteil 5 und einem rotierenden Bauteil 6 positioniert sein, wobei die Gleitfläche 2 an der Gegenfläche 7 des rotierenden Bauteiles 6 dichtend anliegt. Das Bauteil 5 soll einer hohen Temperaturbeaufschlagung, z. B. 200°C unterliegen. Zum Schutz des elastomeren Dichtkörpers 4 gegenüber den im Bereich des Bauteiles 5 gegebenen hohen Temperaturen kommt ein separates Aufnahmeelement 8 für den Gleitring 1 zum Einsatz, das mit einer ebenfalls konisch ausgebildeten, inneren Umfangsfläche 9 versehen ist und den Gleitring 1 über den elastischen Dichtkörper 4 aufnimmt. Damit der Wärmefluß vom Bauteil 5 in Richtung des elastischen Dichtkörpers 4 unterbrochen wird, befindet sich zwischen dem separaten Aufnahmeelement 8 und dem Bauteil 5 ein Isolierelement 10, das in Figur 3 beispielhaft näher beschrieben wird. Das Isolierelement 10 ist gegenüber dem separaten Aufnahmeelement 8 sowie dem Bauteil 5, beispielsweise durch Schrauben, festgelegt und bildet eine statische Dichtstelle. Das Isolierelement 10 erstreckt sich zwischen der rückwärtigen Stirnfläche 11 des Aufnahmeelementes 8 und der gegenüberliegenden Stirnfläche 12 des Bauteiles 5. Durch geeignete Materialauswahl des Isolierelementes 10 können Temperaturabsenkungen im Bereich des elastischen Dichtkörpers 4 bis zu 100°C gegenüber der Bauteiltemperatur realisiert werden, so das die Standzeit des elastischen Dichtkörpers 4 und somit des Gleitringes 1 als Ganzes wesentlich erhöht wird.

Figur 2 zeigt eine Alternative zu Figur 1, wobei gleiche Bauteile mit gleichen Bezugszeichen versehen sind. In Figur 2 kommt eine Gleitringdichtung zum Einsatz, beinhaltend einen Gleitring 1 und einen Gegenring 13. Der Gleitring 1 ist in einem, der Figur 1 entsprechenden, separaten Aufnahmeelement 8 über den elastischen Dichtkörper 4 gelagert und über ein Isolierelement 10 mit dem stationären Bauteil 5 verbunden. Der Gegenring 13 ist spiegelbildlich zum Gleitring 1 aufgebaut und wirkt über ein Dichtelement 14 mit einem rotierenden Bauteil 6 zusammen, das einen konischen inneren Umfangsbereich 15 zur Abstützung des elastischen Dichtkörpers 14 aufweist. Der Gegenring 13 beinhaltet ebenfalls eine Gleitfläche 16, die mit der gegenüberliegenden Gleitfläche 2 des Gleitringes 1 in dichtender Wirkverbindung steht.

Die Funktion bezüglich der Unterbrechung des Wärmdurchflusses vom Bauteil 5 in Richtung des elastischen Dichtkörpers 4 ist entsprechend Figur 1 zu werten.

Figur 3 zeigt den Aufbau eines möglichen Isolierelementes 10, wie es bei Gleitringdichtungen gemäß Figuren 1 und 2 zum Einsatz gelangen kann. Das Isolierelement 10 besteht in diesem Beispiel aus äußeren Körpern 17,18, gebildet durch aluminiumbeschichtete Stahlbleche, die mit vorgebbaren Abstand zueinander vorgesehen sind. Im Bereich mindestens einer ihrer Umfangsflächen 19 sind die Bleche 17,18 in gebördelter Form 20 vorgesehen. Zwischen den Blechen 17,18 erstreckt sich eine wabenartig ausgebildete Struktur 21, in diesem Beispiel gebildet durch mehrlagig vorgesehene Aluminiumfolien 22,23,24,25 die in gewellter Form vorgesehen ist, so das zwischen den einzelnen Folien 22 bis 25 eine Vielzahl von Zellen 26 gebildet werden und die darin enthaltene Luft als Isolierung und somit zur Unterbrechung des Wärmeflusses vom Bauteil 5 in Richtung des Dichtkörpers 4 dient. Damit das Isolierelement 10 gleichzeitig auch als statische Dichtung fungieren kann, sind im Bereich beider Stirnflächen, beispielsweise aus Silikon oder ähnlichen Materialien angeordnete Dichtwerkstoffe 27,28 vorgesehen, die vorzugsweise im Siebdruckverfahren an vorgebbaren Stellen der äußeren Körper 17,18 aufgebracht werden können. Durch diese Maßnahme kann das Eintreten beispielsweise von Wasser in den Lagerraum (nicht dargestellt) sicher vermieden werden.

Die Kombination des separaten Aufnahmeelementes 8 in Wirkverbindung mit dem Isolierelement 10 führt nun zur erwünschten Unterbrechung des Wärmedurchflusses von dem mit hohen Temperaturen beaufschlagten Bauteil 5 in Richtung des elastischen Dichtkörpers 4.

Je nach Temperaturbeaufschlagung besteht auch die Möglichkeit, das in Figur 3 beschriebene Isolierelement 10 durch einfachere Materialien zu ersetzen. Hier können beispielsweise gepresste Faserwerkstoffe, wie Steinwolle, Keramik oder dergleichen zum Einsatz gelangen, die in äquivalenter Weise mit Dichtwerkstoffen 27,28 versehen werden können, damit selbige auch als statische Dichtelemente einsetzbar sind.

## Patentansprüche

1. Gleitringdichtung zur Abdichtung von Bauteilen (5,6) mit hoher Temperaturbeaufschlagung, bestehend aus einem Gleit- (1) bzw. Gegenring (13) der mit einer außerhalb seiner Gleitfläche (2,16) vorgesehenen, zur Aufnahme wenigstens eines elastischen Dichtkörpers (4,14) bestimmten konischen Umfangsfläche (3) versehen ist, **dadurch gekennzeichnet, dass** der Gleit- (1) bzw. Gegenring (13) über den Dichtkörper (4,14) in einem Aufnahmeelement (8) gehalten ist, das zur Unterbrechung des Wärmeflusses vom jeweiligen Bauteil (5) in Richtung des Dichtkörpers (4,14) über mindestens ein Isolierelement (10) mit dem jeweiligen Bauteil (5) in Wirkverbindung steht.

2. Gleitringdichtung nach Anspruch 1, **dadurch gekennzeichnet, dass** das Isolierelement (10) im stirnseitigen Bereich (11) des Aufnahmeelementes (8) vorgesehen ist.

3. Gleitringdichtung nach Anspruch 1 oder 2, **dadurch gekennzeichnet, dass** das lsolierelement (10) im, der Gleitfläche (2,16) des Gleit- (1) und/oder Gegenringes (13) abgewandten, stirnseitigen Bereich (11) des Aufnahmeelementes (8) vorgesehen ist.

4. Gleitringdichtung nach einem der Ansprüche 1 bis 3, **dadurch gekennzeichnet, dass** das Isolierelement (10), gleichzeitig eine statische Dichtstelle bildend, im nicht rotierenden Bereich des zugehörigen Bauteiles (5), gegenüber diesem über das Aufnahmeelement (8) festgelegt, vorgesehen ist.

5. Gleitringdichtung nach einem der Ansprüche 1 bis 4, **dadurch gekennzeichnet, dass** das Isolierelement (10) als ringförmig ausgebildete, sich im wesentlichen über die radiale Wandstärke des Aufnahmeelementes (8) erstreckende Flachdichtung ausgebildet ist.

6. Gleitringdichtung nach einem der Ansprüche 1 bis 5, **dadurch gekennzeichnet, dass** das Isolierelement (10) aus verpressten Fasermaterialien, insbesondere Steinwolle, besteht.

7. Gleitringdichtung nach einem der Ansprüche 1 bis 5, **dadurch gekennzeichnet, dass** das Isolierelement (10) aus keramischem Material gebildet ist.

8. Gleitringdichtung nach einem der Ansprüche 1 bis 5, **dadurch gekennzeichnet, dass** das Isolierelement (10) in Sandwichform vorliegt.

9. Gleitringdichtung nach Anspruch 8, **dadurch gekennzeichnet, dass** das Isolierelement (10) durch äußere, insbesondere aus Blechen bestehende, Körper (17,18) gebildet ist, zwischen denen sich eine wabenartig ausgebildete, insbesondere aus metallischen Werkstoffen bestehende, Struktur (21) erstreckt.

10. Gleitringdichtung nach Anspruch 8 oder 9, **dadurch gekennzeichnet, dass** die äußeren Körper (17,18) durch beschichtete Stahl- oder Aluminumbleche gebildet sind.

11. Gleitringdichtung nach einem der Ansprüche 8 bis 10, **dadurch gekennzeichnet, dass** die äußeren Körper (17,18) durch Al-beschichtete Stahlbleche gebildet sind.

12. Gleitringdichtung nach einem der Ansprüche 8 bis 11, **dadurch gekennzeichnet, dass** die äußeren Körper (17,18) im Bereich mindestens einer ihrer radialen Umfangsbereiche (19) durch Bördelung (20) miteinander verbunden sind.

13. Gleitringdichtung nach einem der Ansprüche 8 bis 12, **dadurch gekennzeichnet, dass** die, eine Isolationsstelle bildende wabenartige ausgebildete Struktur (21) durch insbesondere mehrlagig übereinander geschichtete Folien (22,23,24,25), insbesondere aus Aluminium oder einer Aluminiumlegierung, besteht.

14. Gleitringdichtung nach einem der Ansprüche 1 bis 13, **dadurch gekennzeichnet, dass** das Isolierelement (10) im Bereich mindestens einer seiner Stirnseiten mit einem elastischen Dichtwerkstoff (27,28), insbesondere Silikon, versehen ist.

## Claims

1. Slide ring seal for sealing structural parts (5, 6) subjected to high temperature, comprising a slide (1) or counter-ring (13), which is provided with a conical peripheral surface (3) arranged outside its sliding surface (2, 16) and intended to receive at least one elastic sealing body (4, 14), **characterised in that** the slide (1) or counter-ring (13) is held via the sealing body (4, 14) in a receiving element (8), which is actively connected to the respective structural part (5) via at least one insulating element (10) to interrupt the heat flow from the respective structural part (5) in the direction of the scaling body (4, 14).

2. Slide ring seal according to Claim 1, **characterised in that** the insulating element (10) is provided in the front side region (11) of the receiving element (8).

3. Slide ring seal according to Claim 1 or 2, **characterised in that** the insulating element (10) is provided in the front side region (11) of the receiving element (8) remote from the sliding surface (2, 16) of the slide (1) and/or counter-ring (13).

4. Slide ring seal according to one of Claims 1 to 3, **characterised in that** the insulating element (10), while at the same time forming a sealing point, is provided in the non-rotating region of the associated structural part (5) and fixed in relation to this via the receiving element (8).

5. Slide ring seal according to one of Claims 1 to 4, **characterised in that** the insulating element (10) is configured as a ring-shaped flat seal extending essentially over the radial wall thickness of the receiving element (8).

6. Slide ring seal according to one of Claims 1 to 5, **characterised in that** the insulating element (10) is made from compressed fibre materials, in particular rock wool.

7. Slide ring seal according to one of Claims 1 to 5, **characterised in that** the insulating element (10) is formed from ceramic material.

8. Slide ring seal according to one of Claims 1 to 5, **characterised in that** the insulating element (10) is present in sandwich form.

9. Slide ring seal according to Claim 8, **characterised in that** the insulating element (10) is formed by outer bodies (17, 18), in particular composed of metal sheets, between which a honeycomb-like structure (21), in particular made of metal materials, extends.

10. Slide ring seal according to Claim 8 or 9, **characterised in that** the outer bodies (17, 18) are formed by coated steel or aluminium sheets.

11. Slide ring seal according to one of Claims 8 to 10, **characterised in that** the outer bodies (17, 18) are formed from Al-coated steel sheets.

12. Slide ring seal according to one of Claims 8 to 11, **characterised in that** the outer bodies (17, 18) are connected to one another in the region of at least one of their radial peripheral regions (19) by flanging (20).

13. Slide ring seal according to one of Claims 8 to 12, **characterised in that** the honeycomb-like structure (21) forming an insulation point is formed in particular by multilayered superposed foils (22, 23, 24, 25), in particular made of aluminium or an aluminium alloy.

14. Slide ring seal according to one of Claims 1 to 13, **characterised in that** the insulating clement (10) is provided with an elastic sealing material (27, 28), in particular silicon, in the region of at least one of its front sides.

## Revendications

1. Garniture d'étanchéité à anneau glissant pour l'étanchement de composants (5, 6) exposés à des températures élevées, constituée d'un anneau glissant (1) et/ou d'un anneau fixe (13), qui est pourvu d'une surface périphérique conique (3) en dehors de sa surface de glissement (2, 16), destinée à recevoir au moins un corps d'étanchéité (4, 14) élastique, **caractérisée en ce que** l'anneau glissant (1) et/ou l'anneau fixe (13) est maintenu sur le corps d'étanchéité (4, 14) dans un élément de logement (8), qui est en relation de coopération avec le composant respectif (5) via au moins un élément d'isolation (10) afin d'interrompre le flux de chaleur du composant respectif (5) en direction du corps d'étanchéité (4, 14).

2. Garniture d'étanchéité à anneau glissant suivant la revendication 1, **caractérisée en ce que** l'élément d'isolation (10) est prévu dans la zone frontale (11) de l'élément de logement (8).

3. Garniture d'étanchéité à anneau glissant suivant la revendication 1 ou 2, **caractérisée en ce que** l'élément d'isolation (10) est prévu dans la zone frontale (11) de l'élément de logement (8) écartée de la surface de glissement (2, 16) de l'anneau glissant (1) et/ou l'anneau fixe (13).

4. Garniture d'étanchéité à anneau glissant suivant l'une des revendications 1 à 3, **caractérisée en ce que** l'élément d'isolation (10), formant simultanément un point d'étanchéité statique, est prévu dans la zone qui n'est pas en rotation du composant respectif (5), fixé par rapport à celui-ci par l'élément de logement (8).

5. Garniture d'étanchéité à anneau glissant suivant l'une des revendications 1 à 4, **caractérisée en ce que** l'élément d'isolation (10) est formé comme garniture plate annulaire, s'étendant essentiellement sur l'épaisseur de paroi radiale de l'élément de logement (8).

6. Garniture d'étanchéité à anneau glissant suivant l'une des revendications 1 à 5, **caractérisée en ce que** l'élément d'isolation (10) est constitué de matériaux fibreux comprimés, en particulier de laine de roche.

7. Garniture d'étanchéité à anneau glissant suivant l'une des revendications 1 à 5, **caractérisée en ce que** l'élément d'isolation (10) est constitué de matériau céramique.

8. Garniture d'étanchéité à anneau glissant suivant l'une des revendications 1 à 5, **caractérisée en ce que** l'élément d'isolation (10) est prévu sous forme d'une construction sandwich.

9. Garniture d'étanchéité à anneau glissant suivant la revendication 8, **caractérisée en ce que** l'élément d'isolation (10) est formé de corps extérieurs (17, 18), en particulier de tôles, entre lesquels s'étend une structure (21) en forme de nid d'abeilles, en particulier constituée de matériaux métalliques.

10. Garniture d'étanchéité à anneau glissant suivant la revendication 8 ou 9, **caractérisée en ce que** les corps extérieurs (17, 18) sont formés de tôles d'acier ou d'aluminium revêtues.

11. Garniture d'étanchéité à anneau glissant suivant l'une des revendications 8 à 10, **caractérisée en ce que** les corps extérieurs (17, 18) sont formés de tôles d'acier revêtues d'aluminium.

12. Garniture d'étanchéité à anneau glissant suivant l'une des revendications 8 à 11, **caractérisée en ce que** les corps extérieurs (17, 18) sont reliés ensemble par un collet (20) au moins à proximité de leurs zones périphériques radiales (19).

13. Garniture d'étanchéité à anneau glissant suivant l'une des revendications 8 à 12, **caractérisée en ce que** la structure en forme de nid d'abeilles (21) formant un point d'isolation est constituée de films, en particulier à plusieurs couches empilées l'une sur l'autre (22, 23, 24, 25), en particulier en aluminium ou en alliage d'aluminium.

14. Garniture d'étanchéité à anneau glissant suivant l'une des revendications 1 à 13, **caractérisée en ce que** l'élément d'isolation (10) est pourvu dans la zone d'au moins une de ses face frontales d'un matériau d'étanchéité élastique (27, 28), en particulier de silicone.
